# EUROPÄISCHE PATENTSCHRIFT

(11) **EP 2 310 680 B1**
(45) Veröffentlichungstag und Bekanntmachung des Hinweises auf die Patenterteilung: **07.09.2016**
(21) Anmeldenummer: 09780133.6
(22) Anmeldetag: 03.07.2009
(51) Int. Cl.: F04B 39/02, F16F 15/08, F16F 1/04, F16F 1/12, F16F 3/12, F04B 35/04, F04B 39/00, F04B 39/12

(54) **KÄLTEMITTELVERDICHTER**
REFRIGERANT COMPRESSOR
COMPRESSEUR FRIGORIFIQUE

(30) Priorität: 09.07.2008 AT 37708 U
(43) Veröffentlichungstag der Anmeldung: 20.04.2011
(73) Patentinhaber: Secop Austria GmbH, 8280 Fürstenfeld (AT)
(72) Erfinder: RESCH, Reinhard, A-8330 Feldbach (AT)
(74) Vertreter: KLIMENT & HENHAPEL
(86) Internationale Anmeldenummer: PCT/EP2009/058412
(87) Internationale Veröffentlichungsnummer: WO 2010/003896

(56) Entgegenhaltungen:
- WO-A-00/40862
- WO-A-01/98658
- GB-A- 929 902
- US-A- 2 932 474
- US-A- 3 883 101
- US-A- 4 108 581
- US-A- 4 416 594

## Beschreibung

Die Erfindung bezieht sich auf einen Kältemittelverdichter, umfassend ein hermetisch dichtes Gehäuse, in dessen Innerem eine ein Kältemittel verdichtende, eine Kolben-Zylinder-Einheit samt einem diese antreibenden Elektromotor umfassende Antriebseinheit arbeitet, welche mittels einer beliebigen Anzahl an Federelementen an einem vorzugsweise am Gehäuseboden angeordneten Lagerungsbereich des Gehäuses gelagert ist, wobei ein erster Endbereich des Federelementes ein an der Antriebseinheit angeordnetes, zapfenförmig ausgebildetes oberes Lagerungselement umgibt, während ein zweiter Endbereich des Federelementes ein am Gehäuse angeordnetes, zapfenförmig ausgebildetes unteres Lagerungselement umgibt, gemäß dem Oberbegriff des Anspruchs 1.

Solche Kältemittelverdichter sind seit langem bekannt und kommen vorwiegend in Kühlschränken und -regalen privater und kommerzieller Nutzer zum Einsatz.

Im Zuge des Kältemittelprozesses wird ein Kältemittel in bekannter Weise durch Energieaufnahme aus dem zu kühlenden Raum in einem Verdampfer erhitzt und schließlich überhitzt und mittels des Kältemittelverdichters auf ein höheres Druckniveau gepumpt, wo es Wärme über einen Kondensator abgibt und über eine Drossel, in der eine Druckreduzierung und Abkühlung des Kältemittels erfolgt, wieder zurück in den Verdampfer befördert wird.

Zu diesem Zweck weist der Kältemittelverdichter ein hermetisch dichtes Gehäuse auf, in dessen Innerem eine das Kältemittel
verdichtende Kolben-Zylinder-Motor-Anordnung arbeitet, welche im folgenden Zusammenhang der Einfachheit halber als Antriebseinheit bezeichnet sei. Das die Antriebseinheit bergende Gehäuse wird in der Folge auf einer dafür vorgesehenen Aufstandsfläche positioniert und an das Kühlsystem angeschlossen.

Die Antriebseinheit bedarf einer geeigneten Lagerung im Inneren des Gehäuses, zum Zwecke der Schwingungsdämpfung um einen geräuscharmen Betrieb des Kältemittelkompressors zu ermöglichen, wobei die Antriebseinheit zumeist mittels mehrerer Federelemente an einem dafür vorgesehenen Lagerungsbereich des Gehäuses gelagert ist.

Um die Federelemente in ihrer jeweils vorgesehenen Position am Lagerungsbereich des Gehäuses zu sichern, sind gemäß dem Stand der Technik zapfenförmige Lagerungselemente vorgesehen, welche mit dem Gehäuse verschweißt sind und auf welche die Federelemente direkt oder unter Vorsehung eines Zwischenlageelementes aufgepresst werden.

Die Lagerungselemente sind hierbei auf einer im Wesentlichen ebenen oder gekrümmten Innenseite des Gehäuses angeordnet und ragen in Betriebsposition des Kältemittelverdichters zumeist senkrecht in das Innere des Gehäuses hinein.

Als Nachteil bekannter Anordnungen zur Lagerung der Antriebseinheit ist eine relativ große zulässige Querauslenkung der mittels der Federelemente gelagerten Antriebseinheit anzuführen, wobei sich Querauslenkungen der Antriebseinheit einerseits durch betriebsbedingte Vibrationen, insbesondere durch während eines Anlauf- und Ablaufvorganges der Antriebseinheit entstehende Vibrationen, und andererseits im Zuge eines Transports des Kältemittelverdichters, insbesondere zufolge von Beschleunigungs- und Abbremsmanövern sowie bei Kurvenfahrten eines den Kältemittelverdichter befördernden Fahrzeugs ergeben.

Um die Aufgabe der Schwingungsdämpfung optimal zu erfüllen, müssen die Federelemente eine möglichst geringe Steifigkeit aufweisen. Um jedoch die beim Anlaufvorgang und Auslaufvorgang auftretenden Auslenkungen der Antriebseinheit soweit zu begrenzen, dass diese nicht am Gehäuse anschlägt, müssen die Federelemente eine hohe Steifigkeit aufweisen. Aus diesem Grund können die Federelemente nicht gleichzeitig optimal für die Schwingungsdämpfung im stationären Betrieb und die Vermeidung von zu starken Auslenkungen in der Anlauf- und Ablaufphase ausgelegt werden.

Gemäß dem Stand der Technik finden als Federelemente konventionelle Schraubendruckfedern Einsatz, welche eine zylindrische Innen- bzw. Außenkontur aufweisen.

Bei bekannten Anordnungen zur Lagerung der Antriebseinheit ergibt sich eine relativ große Querauslenkung der Antriebseinheit bzw. der daran angebrachten Lagerungselemente insbesondere dadurch, dass eine beträchtlich große freie Federlänge vorhanden ist, wobei unter "freier Federlänge" jene entlang der Längsachse des Federelementes gemessene Distanz verstanden wird, um welche die Endbereiche bzw. die einander zuweisenden Stirnseiten der gegenüberliegenden Lagerungselemente voneinander distanziert sind. Da in diesen Bereich der "freien Federlänge" weder das obere Lagerungselement, noch das untere Lagerungselement hineinragen, wird den in diesem Bereich befindlichen Windungen des Federelementes im Falle einer an der Antriebseinheit angreifenden Kraft- bzw. Trägheitswirkung kein Rückhalt geboten und es ist daher in diesem Bereich die relativ größte Querauslenkung des Federelementes zu erwarten.

Im Falle des Auftretens besonders starker Querauslenkungen der Antriebseinheit bedingt durch das Anlaufen- oder Auslaufen der Antriebseinheit besteht die Gefahr, dass die Antriebseinheit am Gehäuse anschlägt, was zu einer unzulässigen Geräuschentwicklung führt. Im Falle des Auftretens besonders starker Querauslenkungen der Antriebseinheit während eines Transportstoßes besteht die Gefahr, dass Kunststoffteile der Antriebseinheit am Gehäuse anschlagen und zerstört werden oder die Federelemente aus ihrem Sitz am Lagerungselement herausspringen, wobei einmal aus ihrem Sitz herausgesprungene Federelemente nicht mehr mit Sicherheit auf ihren ursprünglichen Platz zurückgleiten, so dass die Antriebseinheit in ihrer Lage nicht mehr fixiert ist und bei weiteren auftretenden Transportstößen zerstört werden kann.

Die US 4 108 581 A, als nächstliegender Stand der Technik angesehen, offenbart eine Motoraufhängung für einen hermetisch gekapselten Kompressor, umfassend bolzenförmige Lagerungselemente, welche mit einem ersten Endbereich an einem Motor und mit einem zweiten Endbereich an einem Zylinderblock befestigt sind. Zwischen dem Motor und dem Zylinderblock ist ein ringförmiger Flansch angeordnet, auf welchem sich ein das bolzenförmige Lagerungselement umgebendes Federelement abstützt. Das bolzenförmige Lagerungselement wird in einem mittleren Bauteilabschnitt von einem hülsenförmigen Element und einem elastischen Pufferelement umgeben bzw. ist durch diese hindurchgeschoben.
Das Federelement ist hierbei zwischen einem (motorseitigen) Kopfabschnitt des bolzenförmigen Lagerungselementes und dem ringförmigen Flansch angeordnet. Das hülsenförmige Element ist am ringförmigen Flansch angeschweißt. Ein dem hülsenförmigen Element (dem unteren Lagerungselement) zugewandter Endbereich des bolzenförmigen Lagerungselementes (des oberen Lagerungselementes) ist im Zylinderblock verschraubt, also vom Endbereich des unteren Lagerungselementes abgewandt.

Es ist daher die Aufgabe der vorliegenden Erfindung, die genannten Nachteile zu vermeiden und eine verbesserte Lagerungsmöglichkeit für Antriebseinheiten von Kältemittelkompressoren bereitzustellen, welche die transport- und betriebsbedingte Querauslenkung der Antriebseinheit möglichst gering hält, ohne jedoch die Steifigkeit der Federelemente bei den im stationären Betrieb auftretenden sehr kleinen Auslenkungen erhöhen zu müssen und die Schwingungsdämpfung damit zu verschlechtern.

Es ist ein weiteres Ziel der vorliegenden Erfindung, ein Herausspringen des Federelemente bzw. des der Antriebseinheit zugeordneten Lagerungselementes aus seinem vorgesehenen Sitz auch bei einem starken Auslenken der Antriebseinheit während des Transports und während des Betriebs des Kältemittelverdichters sicher zu verhindern.

Erfindungsgemäß werden diese Ziele durch eine Vorrichtung mit den kennzeichnenden Merkmalen des Anspruchs 1 erreicht.

Ein gattungsgemäßer Kältemittelverdichter umfasst ein hermetisch dichtes Gehäuse, in dessen Innerem eine ein Kältemittel verdichtende, eine Kolben-Zylinder-Einheit samt einem diese antreibenden Elektromotor umfassende Antriebseinheit arbeitet, welche mittels einer beliebigen Anzahl an Federelementen an einem vorzugsweise am Gehäuseboden angeordneten Lagerungsbereich des Gehäuses gelagert ist, wobei ein erster Endbereich des Federelementes ein an der Antriebseinheit angeordnetes, zapfenförmig ausgebildetes oberes Lagerungselement umgibt, während ein zweiter Endbereich des Federelementes ein am Gehäuse angeordnetes, zapfenförmig ausgebildetes unteres Lagerungselement umgibt.

Erfindungsgemäß ist es vorgesehen, dass einander zugewandte, vom Federelement umgebene Endbereiche der beiden Lagerungselemente einander in Montageposition der Antriebseinheit in axialer Richtung des Federelementes überlappen, wobei Stirnseiten der Lagerungselemente-Endbereiche einander zuweisen. Auf diese Weise kann die transport- und betriebsbedingte Querauslenkung der Antriebseinheit eines Kältemittelkompressors auch bei Verwendung von Federelementen mit geringer Steifigkeit, sehr gering gehalten werden.

Indem also die Endbereiche der beiden gegenüberliegenden Lagerungselemente - betrachtet in einer orthogonal auf die Längsachse des Federelementes bzw. auf die Längsachsen der Lagerungselemente gerichteten Blickrichtung - abschnittsweise nebeneinander verlaufen, kann die oben beschriebene, bisher im Mittenbereich des Federelementes vorhandene "freie Federlänge" eliminiert werden. Da fortan auch in jenem Überlappungsbereich, in welchem sich das obere und das untere Lagerungselement überlappen, jeder Windung des Federelementes ein ausreichender Rückhalt durch die beiden nebeneinander verlaufenden Endbereiche der Lagerungselemente geboten wird, wird auch im Falle relativ großer an der Antriebseinheit angreifenden Kraft- bzw. Trägheitswirkungen keine extreme Querauslenkung des Federelementes zugelassen bzw. die im während des Transports und während des Betriebszustandes auftretenden Querauslenkungen der Antriebseinheit können mithilfe der vorliegenden Erfindung stark reduziert werden.

Zufolge der erfindungsgemäß erzielbaren Stabilitätssteigerung der Lagerungsanordnung können die Federelemente mit einer geringeren Steifigkeit ausgelegt werden, was mit einer Verbesserung der Schwingungsdämpfung einhergeht und in weiterer Folge eine Verringerung der Betriebsgeräusche bewirkt.

Das erfindungsgemäße Merkmal des "Überlappens" der Lagerungselemente-Endbereiche bedeutet nicht zwingend, dass diese einander kontaktieren. Im Gegenteil, in einer bevorzugten Ausführungsvariante der Erfindung ist es vorgesehen, dass einander zuweisende Stirnseiten der Lagerungselemente-Endbereiche (in Ruhestellung der Lagerungselemente bzw. der Antriebseinheit) voneinander distanziert sein.

In einer weiteren Ausführungsvariante der Erfindung ist es jedoch vorgesehen, dass einander zuweisende Stirnseiten der Lagerungselemente-Endbereiche einander abschnittsweise, vorzugsweise entlang eines in Betriebsposition der Antriebseinheit im Wesentlichen vertikal verlaufenden Kontaktabschnitts kontaktieren. Auf diese Weise kann eine Querauslenkung der Antriebseinheit bzw. des an dieser angebrachten oberen Lagerungselementes besonders effektiv reduziert werden, was aber einhergeht mit einer Verringerung der Schwingungsdämpfungseigenschaften.

Gemäß einer weiteren bevorzugten Ausführungsvariante der Erfindung ist es vorgesehen, dass die Stirnseiten der Lagerungselemente-Endbereiche - betrachtet in einer orthogonal auf die Längsachse des Federelementes bzw. auf die Längsachsen der Lagerungselemente gerichteten Blickrichtung - zumindest abschnittsweise eine zueinander komplementäre Geometrie aufweisen. Auf diese Weise kann bedingt durch den großen Überdeckungsbereich der Lagerungselemente eine gute Abstützung der Federelemente im Fall von großen Querauslenkungen erzielt werden, ohne jedoch den für den vibrationsarmen Betrieb notwendigen Mindestabstand zwischen den beiden komplementären Lagerungselementen verringern zu müssen. Außerdem wird im Falle eines Transportstoßes eine gegenseitige Führung der beiden Lagerungselemente erreicht, wodurch die Beanspruchung der Federelemente in diesem Fall verringert wird.

Diese Eigenschaften einer Paarung und einer vorteilhaften gegenseitigen Führung der beiden gegenüberliegenden Lagerungselemente können durch bevorzugte konstruktive Ausführungsvarianten noch optimiert werden.

So ist es gemäß einer speziellen Ausführungsvariante der Erfindung etwa vorgesehen, dass die Stirnseiten der Lagerungselemente-Endbereiche zumindest abschnittsweise unter einer Neigung zwischen 20° und 70°, vorzugsweise unter einer Neigung von im Wesentlichen 45° gegenüber der Horizontalen verlaufen.

Gemäß einer weiteren Ausführungsvariante der Erfindung ist es vorgesehen, dass die Stirnseiten der Lagerungselemente-Endbereiche eine S-förmige Geometrie aufweisen.

Alternativ dazu kann es gemäß einer weiteren Ausführungsvariante der Erfindung vorgesehen sein, dass die Stirnseiten der Lagerungselemente-Endbereiche eine stufenförmige Geometrie aufweisen.

In einer bevorzugten Ausführungsvariante weisen hierbei die Stirnseiten der Lagerungselemente im Wesentlichen vertikale Kontaktabschnitte auf, welche einander kontaktieren oder zueinander unter geringer Distanz beabstandet und zur gegenseitigen Kontaktierung im Beanspruchungsfalle vorgesehen sind, während im Wesentlichen horizontal verlaufende Stirnseitenabschnitte zueinander um etwa das halbe Durchmessermaß der Lagerungselemente-Endbereiche distanziert sind.

Gemäß einer weiteren bevorzugten Ausführungsvariante der Erfindung ist es vorgesehen, dass der Endbereich zumindest eines der Lagerungselemente einen gegenüber einer zum Federelement weisenden Außenkontur des Lagerungselementes nach außen - also in Richtung des Federelementes bzw. in eine von der Längsachse des Federelementes abweisende Richtung - gewölbten Lippenabschnitt aufweist. Durch Vorsehung eines derartigen Lippenabschnittes verhakt sich das Federelement im den Lippenabschnitt aufweisenden Lagerungselemente-Endbereich und es kann ein Herausspringen des Federelemente bzw. des der Antriebseinheit zugeordneten Lagerungselementes aus seinem vorgesehenen Sitz auch im Falle einer starken Querauslenkung der Antriebseinheit während des Transports und während des Betriebs des Kältemittelverdichters sicher verhindert werden.

Gemäß einer weiteren bevorzugten Ausführungsvariante der Erfindung ist es vorgesehen, dass eine entlang ihrer axialen Erstreckung betrachtete Kontur des Federelementes in einem Überlappungsbereich der Lagerungselemente tailliert ausgeführt ist, wobei die Außenkonturen der Lagerungselemente einen der taillierten Kontur des Federelementes angepassten Verlauf aufweisen. Die Außenkonturen der Lagerungselemente können hierbei die Innenkontur des Federelementes entweder kontaktieren oder zu dieser knapp beabstandet sein. Auf diese Weise wird bewirkt, dass sich die einzelnen Federwindungen bei großen Querauslenkungen an die Lagerungselemente anlegen und dadurch eine hohe Progressivität der Federkennlinie bei Querbeanspruchung erreicht wird. Dadurch kann die auftretende Querauslenkung effektiv verringert werden.

Die Erfindung wird nun anhand eines Ausführungsbeispiels näher erläutert. Dabei zeigt:
- Fig.1: einen Kältemittelverdichter gemäß dem Stand der Technik in Schnittansicht
- Fig.2: eine schematische Darstellung einer gemäß dem Stand der Technik gelagerten Antriebseinheit eines Kältemittelverdichters
- Fig.3: ein Detail "X" aus Fig.2
- Fig.4: eine erste Ausführungsvariante einer erfindungsgemäßen Anordnung zur Lagerung einer Kältemittelverdichter-Antriebseinheit
- Fig.5: eine zweite Ausführungsvariante einer erfindungsgemäßen Anordnung zur Lagerung einer Kältemittelverdichter-Antriebseinheit
- Fig.6: eine dritte Ausführungsvariante einer erfindungsgemäßen Anordnung zur Lagerung einer Kältemittelverdichter-Antriebseinheit
- Fig.7: eine vierte Ausführungsvariante einer erfindungsgemäßen Anordnung zur Lagerung einer Kältemittelverdichter-Antriebseinheit

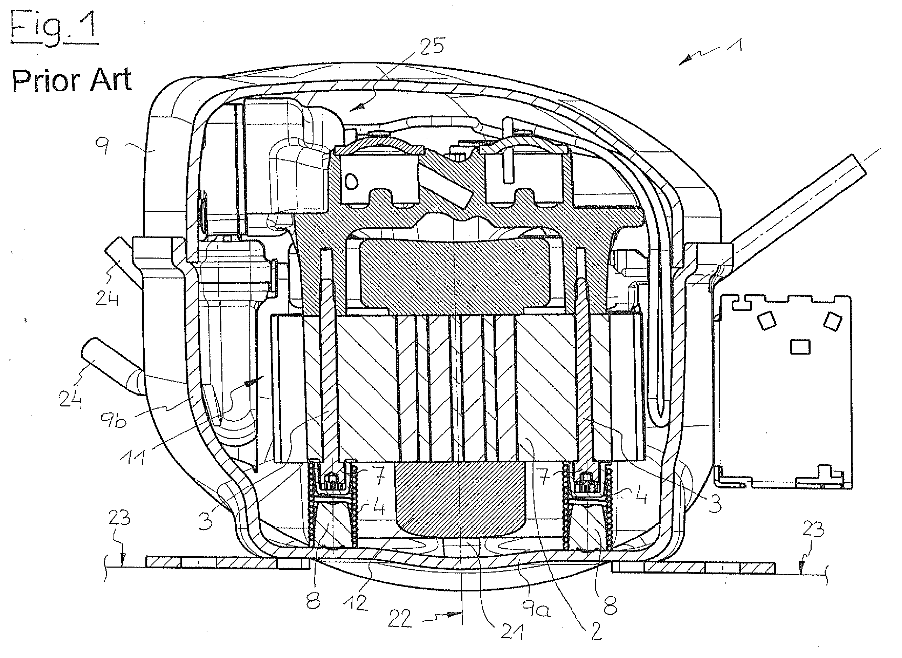

Fig.1 zeigt eine Schnittansicht eines hermetisch gekapselten Kältemittelverdichters gemäß dem Stand der Technik. Der Kältemittelverdichter weist ein auf einer Aufstandsfläche 23 eines Kühlgeräts bzw. eines zu kühlenden Volumens positionierbares Gehäuse 9 auf, welches im vorliegenden Ausführungsbeispiel zweiteilig ausgeführt ist, nämlich in Form einer dargestellten unteren Gehäusehälfte, auf welche nach Montage einer im Inneren des Gehäuses 9 angeordneten Antriebseinheit 11 eine obere Gehäusehälfte in hermetisch abdichtender Weise aufgesetzt wird, um die beiden Gehäusehälften in der Folge z.B. miteinander zu verschrauben oder zu verschweißen.

Die Antriebseinheit 11 ist umfasst als Hauptbestandteile eine nicht näher detaillierte Kolben-Zylinder-Einheit samt einem diese antreibenden Elektromotor. In bekannter Weise ragt eine Kurbelwelle 21 entlang einer Mittelachse 22 in eine zentrische Bohrung eines Rotors 12 des Elektromotors und treibt über ein Pleuel einen Kolben an, welcher in einem Zylindergehäuse 25 eine Hubbewegung vollführt und ein über Saug- und Druckrohre 24 geführtes Kältemittel ansaugt und verdichtet.

Wie anhand von Fig.1 erkennbar, weist die Antriebseinheit 11 im Bereich des Stators 2 des Elektromotors eine beliebige Anzahl an Befestigungselementen bzw. -schrauben 3 auf, welche jeweils einen in Richtung der Aufstandsfläche 23 weisenden Kopf besitzen, auf welchen ein zapfenförmiges oberes Lagerungselement 7 aufgesetzt ist. Das obere Lagerungselement 7 kann auch einstückig mit dem Befestigungselement 3 ausgeführt sein.

Unabhängig von seiner konkreten Ausgestaltung dient das obere Lagerungselement 7 dazu, um die Antriebseinheit 11 mittels Federelementen 4 elastisch an einem Lagerungsbereich 10 des Gehäuses 9 zu lagern. Der Lagerungsbereich 10 befindet sich in einer bevorzugten Bauweise im Bereich eines Gehäusebodens 9a, kann jedoch auch an anderen Stellen des Gehäuses 9 vorgesehen sein, so etwa in einem Seitenbereich 9b des Gehäuses 9.

Die Längsachse 14 des Federelementes 4 verläuft kolinear mit den Längsachsen der Lagerungselemente 7, 8.

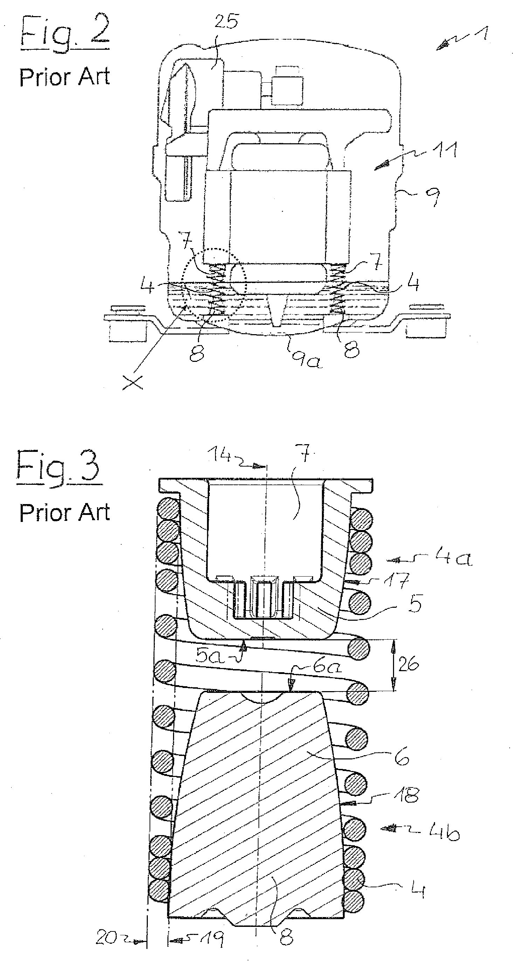

Das Federelement 4 ist im vorliegenden Ausführungsbeispiel als Spiralfeder ausgebildet und weist eine in Fig.3 eingezeichnete Innenkontur 19 sowie eine Außenkontur 20 auf.

Wie anhand von Fig.3 ersichtlich, umgibt ein erster Endbereich 4a des Federelementes 4 das an der Antriebseinheit 11 angeordnete, zapfenförmig ausgebildete obere Lagerungselement 7, während ein zweiter Endbereich 4b des Federelementes 4 das am Gehäuse 9 angeordnete, ebenfalls zapfenförmig ausgebildete unteres Lagerungselement 8 umgibt.

Bei einer solchen, dem Stand der Technik entsprechenden Anordnung zur Lagerung der Antriebseinheit 11 ergibt sich eine relativ große Querauslenkung der Antriebseinheit 11 bzw. des daran angebrachten oberen Lagerungselementes 7 insbesondere dadurch, dass eine bereits eingangs erwähnte "freie Federlänge" 26 vorhanden ist. Als "freie Federlänge" wird im vorliegenden Zusammenhang jene entlang der Längsachse 14 des Federelementes 4 gemessene Distanz verstanden, um welche die Endbereiche 5 und 6 bzw. die einander zuweisenden Stirnseiten 5a und 6a der gegenüberliegenden Lagerungselemente 7, 8 voneinander distanziert sind. Da in diesen Bereich der freien Federlänge 26 weder das obere Lagerungselement 7, noch das untere Lagerungselement 8 hineinragen, wird den in diesem Bereich befindlichen Windungen des Federelementes 4 im Falle einer an der Antriebseinheit 11 angreifenden Kraft- bzw. Trägheitswirkung kein Rückhalt geboten und es ist daher in diesem Bereich die relativ größte Querauslenkung des Federelementes 4 zu erwarten.

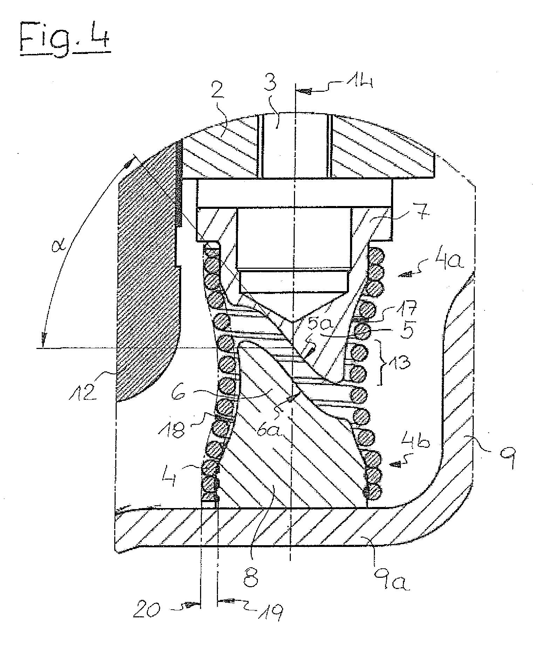

Erfindungsgemäß kann die Steifigkeit der Lagerungsanordnung deutlich erhöht, bzw. die Querauslenkung der Antriebseinheit 11 stark vermindert werden, indem - betrachtet in einer orthogonal auf die Längsachse 14 des Federelementes 4 bzw. auf die Längsachsen der Lagerungselemente 7, 8 gerichteten Blickrichtung - die einander zugewandten, vom Federelement 4 umgebenen Endbereiche 5, 6 der beiden Lagerungselemente 7, 8 einander in Montageposition der Antriebseinheit 11 in axialer Richtung des Federelementes 4 überlappen (siehe Fig.4-7).

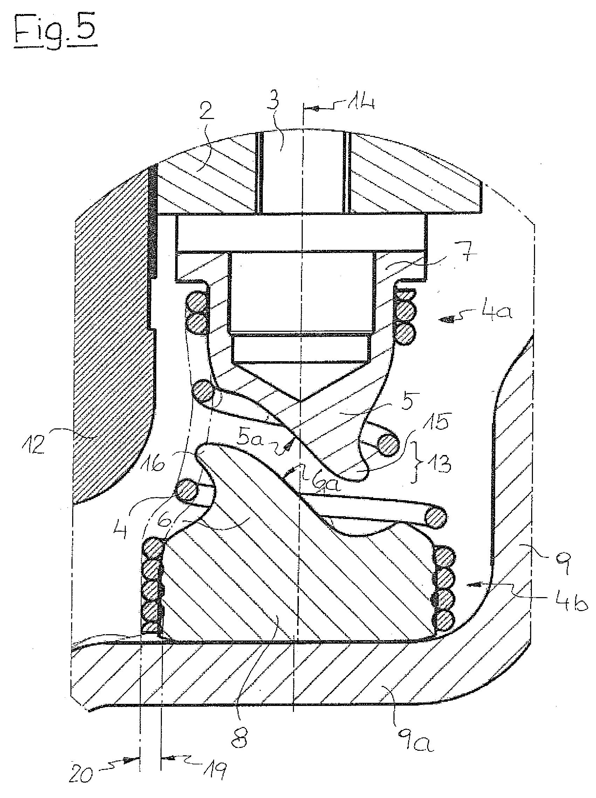

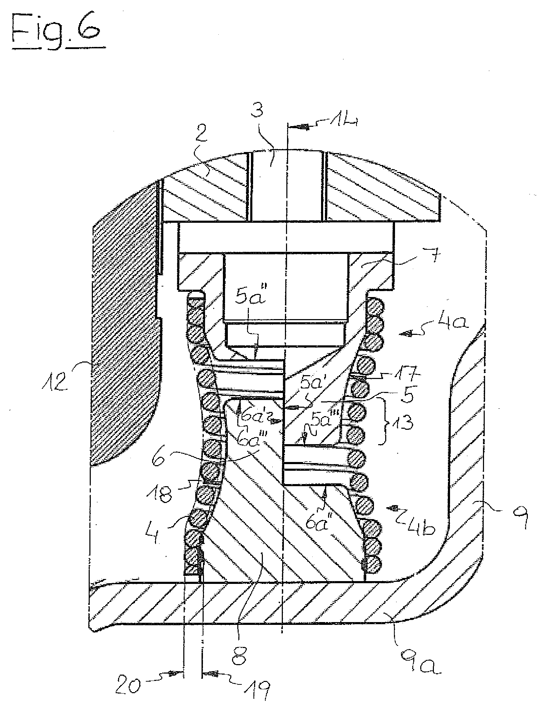

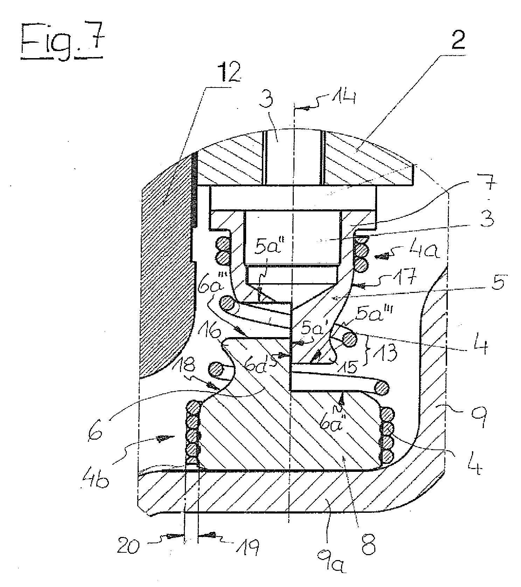

Die einander zuweisenden Stirnseiten 5a, 6a der Lagerungselemente-Endbereiche 5, 6 sind voneinander distanziert (so in den Figuren 4 und 5 dargestellt).Die einander zuweisenden Stirnseiten 5a, 6a können einander hierbei auch abschnittsweise, z.B. entlang eines in Betriebsposition im Wesentlichen vertikal verlaufenden Kontaktabschnitts 5a', 6a', so wie in den Figuren 6 und 7 dargestellt, kontaktieren.

Die Stirnseiten 5a, 6a der Lagerungselemente-Endbereiche 5, 6 weisen gemäß den vorliegenden Ausführungsbeispielen - betrachtet in einer orthogonal auf die Längsachse 14 des Federelementes 4 bzw. auf die Längsachsen der Lagerungselemente 7, 8 gerichteten Blickrichtung - jeweils eine zueinander komplementäre Geometrie auf.

Die Figuren 4 und 5 zeigen bereits eine spezielle Ausführungsvariante der Erfindung, wobei die Stirnseiten 5a, 6a der Lagerungselemente-Endbereiche 5, 6 - wiederum betrachtet in einer orthogonal auf die Längsachse 14 des Federelementes 4 bzw. auf die Längsachsen der Lagerungselemente 7, 8 gerichteten Blickrichtung - eine S-förmige Geometrie aufweisen.

Hierbei verlaufen die Stirnseiten 5a, 6a der Lagerungselemente-Endbereiche 5, 6 abschnittsweise unter einer Neigung α zwischen 20° und 70°, vorzugsweise unter einer Neigung α von im Wesentlichen 45° gegenüber der Horizontalen.

Alternativ dazu ist es auch möglich, dass die Stirnseiten 5a, 6a der Lagerungselemente-Endbereiche 5, 6 eine stufenförmige Geometrie aufweisen (so in den Figuren 6 und 7 dargestellt). Die. Stirnseite 5a des Endbereichs 5 des oberen Lagerungselementes 7 setzt sich hierbei aus einem im Wesentlichen horizontal verlaufenden ersten Stirnseitenabschnitt 5a'' sowie einem dazu orthogonalen, im Wesentlichen vertikalen ersten Kontaktabschnitt 5a' und einem daran anschließenden, wiederum im Wesentlichen horizontal verlaufenden zweiten Stirnseitenabschnitt 5a''' zusammen. Analog dazu setzt sich die Stirnseite 6a des Endbereichs 6 des unteren Lagerungselementes 8 aus einem im Wesentlichen horizontal verlaufenden ersten Stirnseitenabschnitt 6a" sowie einem dazu orthogonalen, im Wesentlichen vertikalen zweiten Kontaktabschnitt 6a' und einem daran anschließenden, wiederum im Wesentlichen horizontal verlaufenden zweiten Stirnseitenabschnitt 6a''' zusammen.

Die im Wesentlichen vertikalen Kontaktabschnitte 5a' und 6a' der Stirnseiten 5a, 6a der Lagerungselemente 7, 8 kontaktieren einander bzw. sind zueinander unter geringer Distanz beabstandet und zur gegenseitigen Kontaktierung im Beanspruchungsfalle vorgesehen, während die im Wesentlichen horizontal verlaufenden Stirnseitenabschnitte 5a'' und 6a"' bzw. 6a'' und 5a''' zueinander um etwa das halbe Durchmessermaß der Lagerungselemente-Endbereiche 5, 6 distanziert sind.

In einer Fortbildung der vorliegenden Erfindung gemäß Fig.5 ist es vorgesehen, dass die Endbereiche 5, 6 der Lagerungselemente 7, 8 jeweils einen gegenüber einer zum Federelement 4 weisenden Außenkontur 17, 18 des Lagerungselementes 7, 8 nach außen - also in Richtung des Federelementes 4 bzw. in eine von der Längsachse 14 des Federelementes 4 abweisende Richtung - gewölbten Lippenabschnitt 15, 16 aufweisen. Der Lippenabschnitt 15, 16 ist jeweils so dimensioniert, dass er im Falle einer Querauslenkung der Antriebseinheit 11 zwischen den Windungen des Federelementes 4 hineingleiten kann.

Die Vorsehung solcher Lippenabschnitte 15, 16 unterstützt einen zuverlässigen Halt des Federelementes 4 in seiner jeweils vorgesehenen Position und kann ein Herausspringen des an der Antriebeinheit 11 angebrachten oberen Lagerungselementes 7 aus seinem Sitz innerhalb des oberen Endbereichs 4a des Federelementes 4 zufolge eines Auslenkens der Antriebseinheit 11 verhindern. Im Auslenkungsfalle der Antriebseinheit 11 verhakt sich nämlich das Federelement 4 im den Lippenabschnitt 15, 16 aufweisenden Lagerungselemente-Endbereich 5, 6 und verhindert eine zu starke Deviation des oberen Lagerungselementes 7 aus seiner in Fig.5 dargestellten Ruhelage.

Die Figuren 4-7 zeigen des Weiteren eine bevorzugte Ausführungsweise der erfindungsgemäßen Lagerungsanordnung, wobei die entlang ihrer axialen Erstreckung betrachtete Innen- bzw. Außenkontur 19, 20 des Federelementes 4 im Überlappungsbereich 13 der Lagerungselemente 7, 8 tailliert ausgeführt ist bzw. einen in Richtung der Längsachse des Federelementes 4 gewölbten Verlauf aufweist. Die Außenkonturen 17, 18 der Lagerungselemente 7, 8 weisen hierbei einen der taillierten Kontur 19, 20 des Federelementes 4 angepassten Verlauf auf. Die Innenkontur 19 des Federelementes 4 kontaktiert hierbei entweder die Außenkonturen 17, 18 der Lagerungselemente 7, oder ist zu diesen knapp beabstandet.

Es sei angemerkt, dass das Federelement 4 an einen Endbereichen 4a, 4b mit seiner Innenkontur 19 an den Lagerungselementen 7, 8 aufgepresst oder angelötet sein kann.

Die Anzahl der an der Antriebseinheit 11 vorgesehenen Lagerungselemente 7 bzw. der Federelemente 4 kann beliebig sein, jedoch sind üblicherweise drei bis fünf kreisförmig positionierte Lagerungsanordnungen vorgesehen, um die Antriebseinheit 11 am Gehäuse 9 zu lagern.

Die Lagerungselemente 7, 8 können aus Stahl oder auch aus Kunststoff, vorzugsweise einem thermoplastischen Kunststoff gefertigt sein, um die Antriebseinheit 11 vom umgebenden Gehäuse 9 elektrisch zu isolieren.

Üblicherweise sind die Federachsen 14 im Wesentlichen normal zur Aufstandsfläche 23 des Gehäuses 9 angeordnet. Im Falle alternativer Ausgestaltungen der Antriebseinheit 11 und des Gehäuses 9 ist es jedoch ebenfalls denkbar, die Federachsen 14 geneigt zur Aufstandsfläche 23 des Gehäuses 9 bzw. zur Lotrechten anzuordnen.

Für den Fachmann ist darüber hinaus klar, dass das Federelement 4 anstelle einer in den Figuren 1-7 dargestellten Ausbildung als Spiralfeder auch ganz anders ausgestaltet sein kann, so etwa in Form eines hohlen oder vollen Kompressionskörpers bzw. eines "Gummipuffers".

## Patentansprüche

1. Kältemittelverdichter (1), umfassend ein hermetisch dichtes Gehäuse (9), in dessen Innerem eine ein Kältemittel verdichtende, eine Kolben-Zylinder-Einheit samt einem diese antreibenden Elektromotor umfassende Antriebseinheit (11) arbeitet, welche mittels einer beliebigen Anzahl an Federelementen (4) an einem vorzugsweise am Gehäuseboden (6) angeordneten Lagerungsbereich (10) des Gehäuses (9) gelagert ist, wobei ein erster Endbereich (4a) des Federelementes (4) ein an der Antriebseinheit (11) angeordnetes, zapfenförmig ausgebildetes oberes Lagerungselement (7) umgibt, während ein zweiter Endbereich (4b) des Federelementes (4) ein am Gehäuse (9) angeordnetes, zapfenförmig ausgebildetes unteres Lagerungselement (8) umgibt, **dadurch gekennzeichnet, dass** einander zugewandte, vom Federelement (4) umgebene Endbereiche (5, 6) der beiden Lagerungselemente (7, 8) einander in Montageposition der Antriebseinheit (11) in axialer Richtung des Federelementes (4) überlappen, wobei Stirnseiten (5a, 6a) der Lagerungselemente-Endbereiche (5, 6) einander zuweisen.

2. Kältemittelverdichter nach Anspruch 1, **dadurch gekennzeichnet, dass** die einander zuweisenden Stirnseiten (5a, 6a) der Lagerungselemente-Endbereiche (5, 6) voneinander distanziert sind.

3. Kältemittelverdichter nach Anspruch 1, **dadurch gekennzeichnet, dass** die einander zuweisenden Stirnseiten (5a, 6a) der Lagerungselemente-Endbereiche (5, 6) einander abschnittsweise, vorzugsweise entlang eines in Betriebsposition im Wesentlichen vertikal verlaufenden Kontaktabschnitts (5a', 6a'), kontaktieren.

4. Kältemittelverdichter nach einem der Ansprüche 1 bis 3, **dadurch gekennzeichnet, dass** die Stirnseiten (5a, 6a) der Lagerungselemente-Endbereiche (5, 6), betrachtet in einer orthogonal auf die Längsachse (14) des Federelementes (4) bzw. auf die Längsachsen der Lagerungselemente (7, 8) gerichteten Blickrichtung, zumindest abschnittsweise eine zueinander komplementäre Geometrie aufweisen.

5. Kältemittelverdichter nach Anspruch 4, **dadurch gekennzeichnet, dass** die Stirnseiten (5a, 6a) der Lagerungselemente-Endbereiche (5, 6) zumindest abschnittsweise unter einer Neigung (α) zwischen 20° und 70°, vorzugsweise unter einer Neigung (α) von im Wesentlichen 45° gegenüber der Horizontalen verlaufen.

6. Kältemittelverdichter nach Anspruch 4,
**dadurch gekennzeichnet, dass** die Stirnseiten (5a, 6a) der Lagerungselemente-Endbereiche (5, 6) eine S-förmige Geometrie aufweisen.

7. Kältemittelverdichter nach Anspruch 4,
**dadurch gekennzeichnet, dass** die Stirnseiten (5a, 6a) der Lagerungselemente-Endbereiche (5, 6) eine stufenförmige Geometrie aufweisen.

8. Kältemittelverdichter nach Anspruch 7, **dadurch gekennzeichnet, dass** die Stirnseiten (5a, 6a) der Lagerungselemente (7, 8) im Wesentlichen vertikale Kontaktabschnitte (5a', 6a') aufweisen, welche einander kontaktieren oder zueinander unter geringer Distanz beabstandet und zur gegenseitigen Kontaktierung im Beanspruchungsfalle vorgesehen sind, während im Wesentlichen horizontal verlaufende Stirnseitenabschnitte (5a'',6a'''; 6a'',5a''') zueinander um etwa das halbe Durchmessermaß der Lagerungselemente-Endbereiche (5, 6) distanziert sind.

9. Kältemittelverdichter nach einem der Ansprüche 1 bis 8, **dadurch gekennzeichnet, dass** der Endbereich (5, 6) zumindest eines der Lagerungselemente (7, 8) einen gegenüber einer zum Federelement (4) weisenden Außenkontur (17, 18) des Lagerungselementes (7, 8) nach außen bzw. in Richtung des Federelementes (4) weisenden, gewölbten Lippenabschnitt (15, 16) aufweist.

10. Kältemittelverdichter nach einem der Ansprüche 1 bis 9, **dadurch gekennzeichnet, dass** eine entlang ihrer axialen Erstreckung betrachtete Kontur (19, 20) des Federelementes (4) in einem Überlappungsbereich (13) der Lagerungselemente (7, 8) tailliert ausgeführt ist, wobei die Außenkonturen (17, 18) der Lagerungselemente (7, 8) einen der taillierten Kontur (19, 20) des Federelementes (4) angepassten Verlauf aufweisen.

## Claims

1. A refrigerant compressor (1), comprising a hermetically sealed housing (9), in whose interior a drive unit (11), which compresses a refrigerant, and comprises a piston-cylinder unit including an electric motor driving it, operates, which is mounted using an arbitrary number of spring elements (4) on a mounting area (10) of the housing (9) preferably situated on the housing floor (6), a first end area (4a) of the spring element (4) enclosing a pin-shaped upper mounting element (7) situated on the drive unit (11), while a second end area (4b) of the spring element (4) encloses a pin-shaped lower mounting element (8) situated on the housing (9), **characterized in that** end areas (5, 6) of the two mounting elements (7, 8), which face toward one another and are enclosed by the spring element (4), overlap one another in the installed position of the drive unit (11) in the axial direction of the spring element (4), front sides (5a, 6a) of the mounting element end areas (5, 6) facing toward one another.

2. The refrigerant compressor according to Claim 1, **characterized in that** the front sides (5a, 6a) of the mounting element end areas (5, 6) facing toward one another are spaced apart from one another.

3. The refrigerant compressor according to Claim 1, **characterized in that** the front sides (5a, 6a) of the mounting element end areas (5, 6) facing toward one another contact one another sectionally, preferably along a contact section (5a', 6a') running essentially vertically in the operating position.

4. The refrigerant compressor according to one of Claims 1 or 3, **characterized in that** the front sides (5a, 6a) of the mounting element end areas (5, 6) - viewed in a viewing direction oriented orthogonally to the longitudinal axis (14) of the spring element (4) or to the longitudinal axes of the mounting elements (7, 8) - at least sectionally have a complementary geometry to one another.

5. The refrigerant compressor according to Claim 4, **characterized in that** the front sides (5a, 6a) of the mounting element end areas (5, 6) at least sectionally run at an inclination (α) between 20° and 70°, preferably at an inclination (α) of essentially 45° in relation to the horizontal.

6. The refrigerant compressor according to Claim 4, **characterized in that** the front sides (5a, 6a) of the mounting element end areas (5, 6) have an S-shaped geometry.

7. The refrigerant compressor according to Claim 4, **characterized in that** the front sides (5a, 6a) of the mounting element end areas (5, 6) have a stepped geometry.

8. The refrigerant compressor according to Claim 7, **characterized in that** the front sides (5a, 6a) of the mounting elements (7, 8) have essentially vertical contact sections (5a', 6a'), which contact one another or are spaced apart from one another at a small distance and are provided for mutual contact in case of strain, while essentially horizontally running front side sections (5a'',6a'''; 6a'',5a''') are spaced apart from one another by approximately half of the diameter dimension of the mounting element end areas (5, 6).

9. The refrigerant compressor according to one of Claims 1 to 8, **characterized in that** the end area (5, 6) of at least one of the mounting elements (7, 8) has a lip section (15, 16), which is curved and faces outward in relation to an outer contour (17, 18) of the mounting element (7, 8) facing toward the spring element (4) or faces in the direction of the spring element (4).

10. The refrigerant compressor according to one of Claims 1 to 9, **characterized in that** a contour (19, 20) of the spring element (4) viewed along its axial extension is implemented as tapered in an overlap area (13) of the mounting elements (7, 8), the outer contours (17, 18) of the mounting elements (7, 8) having a course adapted to the tapered contour (19, 20) of the spring element (4).

## Revendications

1. Compresseur pour réfrigérant (1), comprenant un boîtier (9) hermétiquement étanche, à l'intérieur duquel fonctionne une unité d'entraînement (11) qui comprime un réfrigérant et qui comprend une unité de piston et cylindre et un moteur électrique entraînant celle-ci, qui est supportée au moyen d'un nombre quelconque d'éléments de ressort (4) sur une zone d'appui (10) du boîtier (9) disposée de préférence dans le fond du boîtier (6), une première partie d'extrémité (4a) de l'élément de ressort (4) entourant un élément d'appui supérieur (7) conique disposé sur l'unité d'entraînement (11) tandis qu'une deuxième partie d'extrémité (4b) de l'élément de ressort (4) entoure un élément d'appui inférieur (8) conique disposé sur le boîtier (9), **caractérisé en ce que** des parties d'extrémité (5, 6) des deux éléments d'appui (7, 8) tournées l'une vers l'autre et entourées par l'élément de ressort (4) se chevauchent mutuellement dans la position de montage de l'unité d'entraînement (11) dans le sens axial de l'élément de ressort (4), des faces frontales (5a, 6a) des parties d'extrémité des éléments d'appui (5, 6) étant tournées l'une vers l'autre.

2. Compresseur pour réfrigérant selon la revendication 1, **caractérisé en ce que** les faces d'extrémité (5a, 6a) des parties d'extrémité (5, 6) des éléments d'appui qui se font face sont écartées l'une de l'autre.

3. Compresseur pour réfrigérant selon la revendication 1, **caractérisé en ce que** les faces d'extrémité (5a, 6a) des parties d'extrémité (5, 6) des éléments d'appui qui se font face sont en contact l'une avec l'autre par zones, de préférence le long d'une section de contact (5a', 6a') sensiblement verticale dans la position de fonctionnement.

4. Compresseur pour réfrigérant selon l'une des revendications 1 à 3, **caractérisé en ce que** les faces d'extrémité (5a, 6a) des parties d'extrémité des éléments d'appui (5, 6), vues dans une direction perpendiculaire à l'axe longitudinal (14) de l'élément de ressort (4) ou aux axes longitudinaux des éléments d'appui (7, 8), ont au moins par zones une géométrie complémentaire l'une de l'autre.

5. Compresseur pour réfrigérant selon la revendication 4, **caractérisé en ce que** les faces d'extrémité (5a, 6a) des parties d'extrémité des éléments d'appui (5, 6) suivent au moins par zones une inclinaison (α) de 20° à 70° par rapport à l'horizontale, de préférence une inclinaison (α) de sensiblement 45°.

6. Compresseur pour réfrigérant selon la revendication 4, **caractérisé en ce que** les faces d'extrémité (5a, 6a) des parties d'extrémité des éléments d'appui (5, 6) présentent une géométrie en forme de S.

7. Compresseur pour réfrigérant selon la revendication 4, **caractérisé en ce que** les faces d'extrémité (5a, 6a) des parties d'extrémité des éléments d'appui (5, 6) présentent une géométrie en gradins.

8. Compresseur pour réfrigérant selon la revendication 7, **caractérisé en ce que** les faces d'extrémité (5a, 6a) des éléments d'appui (7, 8) présentent des sections de contact (5a', 6a') sensiblement verticales, qui sont en contact l'une avec l'autre ou sont écartées l'une de l'autre d'une faible distance et sont conçues pour venir en contact l'une avec l'autre en cas de contraintes, tandis que des sections des faces d'extrémité (5a", 6a'" ; 6a", 5a'") sensiblement horizontales sont écartées l'une de l'autre d'environ la moitié du diamètre des parties d'extrémité des éléments d'appui (5, 6).

9. Compresseur pour réfrigérant selon l'une des revendications 1 à 8, **caractérisé en ce que** la partie d'extrémité (5, 6) d'au moins un des éléments d'appui (7, 8) présente une section de lèvre (15, 16) bombée, orientée vers l'extérieur par rapport à un contour extérieur (17, 18) de l'élément d'appui (7, 8) orienté vers l'élément de ressort (4) ou orientée vers l'élément de ressort (4).

10. Compresseur pour réfrigérant selon l'une des revendications 1 à 9, **caractérisé en ce qu'**un contour (19, 20) de l'élément de ressort (4) vu dans le sens de son étendue axiale est resserré dans une zone de chevauchement (13) des éléments d'appui (7, 8), les contours extérieurs (17, 18) des éléments d'appui (7, 8) présentant une forme adaptée au contour resserré (19, 20) de l'élément de ressort (4).
